# EUROPÄISCHE PATENTSCHRIFT

(11) **EP 2 718 126 B1**
(45) Veröffentlichungstag und Bekanntmachung des Hinweises auf die Patenterteilung: **15.07.2015**
(21) Anmeldenummer: 12738047.5
(22) Anmeldetag: 08.06.2012
(51) Int. Cl.: B60C 23/04

(54) **REIFENDRUCKÜBERWACHUNGSEINHEIT UND VERFAHREN ZUR HERSTELLUNG EINER REIFENDRUCKÜBERWACHUNGSEINHEIT**
TIRE PRESSURE MONITORING UNIT AND METHOD FOR PRODUCING A TIRE PRESSURE MONITORING UNIT
UNITÉ DE SURVEILLANCE DE LA PRESSION DE PNEUMATIQUES ET PROCÉDÉ DE FABRICATION D'UNE UNITÉ DE SURVEILLANCE DE LA PRESSION DE PNEUMATIQUES

(30) Priorität: 09.06.2011 DE 102011103666
(43) Veröffentlichungstag der Anmeldung: 16.04.2014
(73) Patentinhaber: Huf Hülsbeck & Fürst GmbH & Co. KG, 42551 Velbert (DE)
(72) Erfinder: NAGORA, Andreas, 75015 Bretten (DE); TADELE, Sisay, 71229 Leonberg (DE)
(74) Vertreter: Twelmeier Mommer & Partner
(86) Internationale Anmeldenummer: PCT/EP2012/060873
(87) Internationale Veröffentlichungsnummer: WO 2012/168418

(56) Entgegenhaltungen:
- JP-A- 2006 188 097
- JP-A- 2008 120 125
- US-A1- 2006 272 402
- US-A1- 2007 295 076

## Beschreibung

Die Erfindung geht aus von einer Reifendrucküberwachungseinheit mit den im Oberbegriff des Anspruchs 1 angegebenen Merkmalen. Eine solche Reifendrucküberwachungseinheit ist aus der EP 1 270 277 A2 sowie aus der US 2006 /272402 A1 bekannt.

Reifendrucküberwachungseinheiten enthalten einen Sensor zur Messung des Reifendrucks und werden an Rädern von Fahrzeugen montiert. Im Betrieb übermitteln Reifendrucküberwachungseinheiten einer Zentraleinheit drahtlos Informationen über den Luftdruck des Fahrzeugreifens. Reifendrucküberwachungseinheiten bilden zusammen mit der Zentraleinheit ein Reifendrucküberwachungssystem.

Aus der EP 1 270 277 A2 ist es bekannt zur Herstellung einer Reifendrucküberwachungseinheit eine Mess- und Sendeelektronik zusammen mit einer Batterie und einem Ventilschaft mit Kunststoff zu umspritzen und auf diese Weise ein Gehäuse der Reifendrucküberwachungseinheit herzustellen. Vorteilhaft lässt sich so kostengünstig eine Reifendrucküberwachungseinheit herstellen, deren elektrische Komponenten wirksam vor schädlichen Umwelteinflüssen geschützt sind und die sich mit geringem Aufwand am Rad eines Fahrzeugs montieren lässt.

Aus der US 2007/295076 A1 ist eine Reifendrucküberwachungseinheit bekannt, bei der ein Halteblech in das Gehäuse eingegossen ist. Aus der JP 2006 188097 A und der JP 2008 120125 A sind Reifendrucküberwachungseinheiten bekannt, bei denen ein Halteblech in das Gehäuse eingeschoben ist.

Aufgabe der vorliegenden Erfindung ist es, einen Weg aufzuzeigen, wie sich die Kosten eines Reifendrucküberwachungssystems noch weiter reduzieren lassen.

Diese Aufgabe wird durch eine Reifendrucküberwachungseinheit mit den im Anspruch 1 angegebenen Merkmalen sowie durch ein Verfahren gemäß Anspruch 10 gelöst. Vorteilhafte Weiterbildungen der Erfindung sind Gegenstand von Unteransprüchen.

Eine erfindungsgemäße Reifendrucküberwachungseinheit hat ein Trägerblech, das die Mess- und Sendeelektronik sowie die Energiequelle trägt. Vor dem Umspritzen mit Kunststoff können die Mess- und Sendeelektronik sowie die Energiequelle auf dem Trägerblech vormontiert werden, um eine leicht handhabbare Einheit zu schaffen, die dann mit Kunststoff umspritzt werden kann, um ein Gehäuse der Reifendrucküberwachungseinheit zu schaffen. Nach dem Umspritzen ragt ein Befestigungsabschnitt des Trägerblechs aus dem ein Gehäuse bildenden Kunststoffkörper heraus. Der Befestigungsabschnitt hat ein Befestigungsloch, mit dem die Reifendrucküberwachungseinheit beispielsweise auf einen Ventilschaft aufgesteckt oder durch das eine Schraube hindurchgeführt werden kann, mit der die Reifendrucküberwachungseinheit beispielsweise an einem Ventilfuß befestigt werden kann. Durch die Doppelfunktion des Trägerblechs sowohl eine Befestigung der Reifendrucküberwachungseinheit an einem Fahrzeugrad als auch eine vormontierbare Baugruppe, die sich leicht handhaben und mit Kunststoff umspritzen lässt, zu ermöglichen, lassen sich erhebliche Kosteneinsparungen realisieren.

Eine vorteilhafte Weiterbildung der Erfindung sieht vor, dass der Befestigungsabschnitt gegenüber einem Hauptabschnitt des Trägerblechs, der die Mess- und Sendeelektronik trägt, abgebogen ist. Auf diese Weise kann die Reifendrucküberwachungseinheit auf dem Boden eines Felgenbetts aufsitzen und trotzdem mit dem Befestigungsabschnitt an einem Ventilschaft oder einem anderen Befestigungselement befestigt sein. Vorteilhaft ist insbesondere, wenn der Befestigungsabschnitt mit dem Hauptabschnitt einen Winkel von 90° bis 150° einschließt.

Eine weitere vorteilhafte Weiterbildung der Erfindung sieht vor, dass die Mess- und Sendeelektronik auf einer Schaltungsträgerplatte angeordnet ist, die auf dem Trägerblech liegt. Bevorzugt sitzt auch die Energiequelle auf der Schaltungsträgerplatte. An sich ist es aber auch möglich, dass die Energiequelle neben oder unter der Schaltungsträgerplatte angeordnet ist. Die Verwendung einer Schaltungsträgerplatte erleichtert das Vormontieren des Trägerblechs mit der Mess- und Sendeelektronik und der Energiequelle zu einer Baugruppe, die dann umspritzt werden kann. Bevorzugt ist aus dem Trägerblech wenigstens eine Haltelasche ausgestanzt und aufgestellt, welche die Schaltungsträgerplatte hält. Auf diese Weise kann die Schaltungsträgerplatte bereits vor dem Umspritzen an dem Trägerblech befestigt werden. Die vormontierte Baugruppe aus Trägerblech, Mess- und Sendeelektronik und Energiequelle lässt sich dadurch leichter handhaben.

Eine erfindungsgemäße Reifendrucküberwachungseinheit wird hergestellt, indem eine Mess- und Sendeelektronik zum Messen und drahtlosen Senden von Druckinformationen sowie eine Energiequelle zur Stromversorgung der Mess- und Sendeelektronik auf einem Trägerblech angeordnet und danach mit Kunststoff umspritzt werden, um ein Kunststoffgehäuse der Reifendrucküberwachungseinheit zu bilden. Beim Umspritzen wird ein Befestigungsabschnitt, der ein Befestigungsloch hat, aufweist, frei gelassen, so dass der Befestigungsabschnitt aus dem durch Umspritzen gebildeten Kunststoffgehäuse herausragt.

Weitere Einzelheiten und Vorteile der Erfindung werden an einem Ausführungsbeispiel unter Bezugnahme auf die beigefügten Zeichnungen erläutert. Es zeigen:
- Figur 1: eine schematische Darstellung einer Reifendrucküberwachungseinheit ohne Gehäuse, nämlich einer Baugruppe bestehend aus einem Trägerblech und einer Schaltungsträgerplatte mit einer Mess- und Sendeelektronik und einer Energiequelle;
- Figur 2: die in Figur 1 dargestellte Baugruppe ohne Energiequelle;
- Figur 3: eine durch Umspritzen der in Figur 1 dargestellten Baugruppe mit Kunststoff hergestellte Reifendrucküberwachungseinheit; und
- Figur 4: eine weitere Ansicht zu Figur 3.

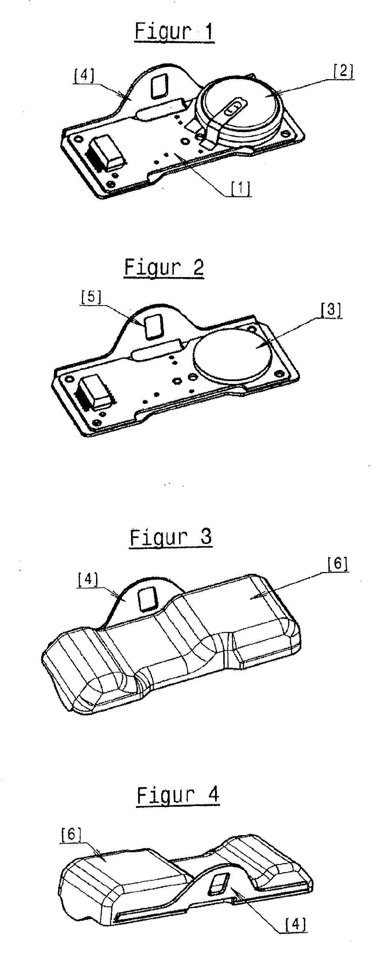

Die in den Figuren 3 und 4 dargestellte Reifendrucküberwachungseinheit besteht aus einem Kunststoffgehäuse 6 und einer in Figur 1 dargstellten Baugruppe, um die ein Kunststoffkörper 6 als Gehäuse herumgespritzt wurde. Die in Figur 1 dargestellte Baugruppe besteht aus einem Trägerblech 4, das eine Schaltungsträgerplatte 1 mit einer Mess- und Sendeelektronik sowie eine Energiequelle 2, beispielsweise einer Batterie, trägt.

Die Batterie 2 sitzt bei dem dargestellten Ausführungsbeispiel auf einem Kontakt 3 der Schaltungsträgerplatte 1. An sich kann die Energiequelle 2 aber beispielsweise auch zwischen Schaltungsträgerplatte 1 und Trägerblech 4 oder auf dem Trägerblech 4 neben der Schaltungsträgerplatte 1 angeordnet sein. Anstelle einer Batterie 2 kann als Energiequelle insbesondere auch ein Generator, beispielsweise ein piezoelektrischer Generator, verwendet werden.

Das Trägerblech 4 hat einen Hauptabschnitt, auf dem die Mess- und Sendeelektronik sowie die Energiequelle 2 angeordnet sind und einen Befestigungsabschnitt mit einem Befestigungsloch 5, das bevorzugt als ein Langloch ausgebildet ist. Wie die Figuren 3 und 4 zeigen ragt der Befestigungsabschnitt aus dem Kunststoffgehäuse 6 heraus. Der Befestigungsabschnitt ist gegenüber dem Hauptabschnitt abgebogen und schließt mit ihm ein Winkel zwischen 90° und 150° ein.

Bevorzugt hat der Hauptabschnitt eine etwas größere Fläche als die Schaltungsträgerplatte 1, die auf ihm liegt. Auf diese Weise kann die Schaltungsträgerplatte 1 leichter auf dem Hauptabschnitt montiert werden. Aus dem Trägerblech 4 können eine oder mehrere Haltelaschen ausgestanzt und aufgebogen sein, welche die Schaltungsträgerplatte 1 halten. Entsprechende Laschen können beispielsweise in Durchbrüche der Schaltungsträgerplatte 1 eingreifen. Die Schaltungsträgerplatte 1 kann aber beispielsweise auf andere Weise an dem Trägerblech 4 befestigt sein, beispielsweise durch Kleben oder Nieten.

Beim Umspritzen der in Figur 1 gezeigten Baugruppe, also beispielsweise der der Schaltungsträgerplatte mit Mess- und Sendeelektronik sowie Energiequelle 2 und dem Trägerblech 4, wird bevorzugt auch die Unterseite des Hauptabschnitts der Trägerblechs 4 mit Kunststoff bedeckt, so dass nur der Befestigungsabschnitt des Trägerblechs 4 aus dem Kunststoffgehäuse 6 herausragt.

### Bezugszahlen

- 1: Schaltungsträgerplatte
- 2: Energiequelle
- 3: Kontakt
- 4: Trägerblech
- 5: Befestigungsloch
- 6: Kunststoffkörper

## Patentansprüche

1. Reifendrucküberwachungseinheit mit
einer Mess- und Sendeelektronik zum Messen und drahtlosen Senden von Druckinformationen,
einer Energiequelle (2) zur Stromversorgung der Mess- und Sendeelektronik, und einem Kunststoffkörper (6), in den die Mess- und Sendeelektronik sowie die Energiequelle (2) eingebettet sind,
**gekennzeichnet durch** ein Trägerblech (4), das die Mess- und Sendeelektronik sowie die Energiequelle (2) trägt und mit einem Befestigungsabschnitt, der ein Befestigungsloch (5) hat, aus dem Kunststoffkörper (6) herausragt.

2. Reifendrucküberwachungseinheit nach Anspruch 1, **dadurch gekennzeichnet, dass** der Befestigungsabschnitt gegenüber einem Hauptabschnitt des Trägerblechs (4), der die Mess- und Sendelektronik trägt, abgebogen ist.

3. Reifendrucküberwachungseinheit nach Anspruch 2, **dadurch gekennzeichnet, dass** der Befestigungsabschnitt mit dem Hauptabschnitt einen Winkel zwischen 90° und 150° einschließt.

4. Reifendrucküberwachungseinheit nach einem der vorstehenden Ansprüche, **dadurch gekennzeichnet, dass** das Befestigungsloch (5) ein Langloch ist.

5. Reifendrucküberwachungseinheit nach einem der vorstehenden Ansprüche, **dadurch gekennzeichnet, dass** die Mess- und Sendeelektronik auf einer Schaltungsträgerplatte (1) angeordnet ist, die auf dem Trägerblech (4) liegt.

6. Reifendrucküberwachungseinheit nach Anspruch 5, **dadurch gekennzeichnet, dass** die Energiequelle (2) auf der Schaltungsträgerplatte (1) sitzt.

7. Reifendrucküberwachungseinheit nach Anspruch 5 oder 6, **dadurch gekennzeichnet, dass** aus dem Trägerblech (4) wenigstens eine Haltelasche ausgestanzt und aufgebogen ist, welche die Schaltungsträgerplatte (1) hält.

8. Reifendrucküberwachungseinheit nach einem der vorstehenden Ansprüche, **dadurch gekennzeichnet, dass** die Unterseite des Hauptabschnitts des Trägerblechs (4), der die Mess- und Sendeelektronik und die Energiequelle (2) trägt, von dem Kunststoffkörper zumindest teilweise, bevorzugt vollständig, bedeckt ist.

9. Reifendrucküberwachungseinheit nach einem der vorstehenden Ansprüche, **dadurch gekennzeichnet, dass** die Energiequelle (2) ein Generator ist.

10. Verfahren zum Herstellen einer Reifendrucküberwachungseinheit, wobei eine Mess- und Sendeelektronik zum Messen und drahtlosen Senden von Druckinformationen sowie eine Energiequelle (2) zur Stromversorgung der Mess- und Sendeelektronik mit Kunststoff umspritzt werden, um ein Kunststoffgehäuse (6) der Reifendrucküberwachungseinheit zu bilden, **dadurch gekennzeichnet, dass** die Mess- und Sendeelektronik sowie die Energiequelle (2) vor dem Umspritzen auf einem Trägerblech (4) angeordnet werden, das einen Hauptabschnitt, auf dem die Mess- und Sendeelektronik angeordnet ist, und einen Befestigungsabschnitt, der ein Befestigungsloch (5) hat, aufweist, und
beim Umspritzen der Befestigungsabschnitt frei gelassen wird, so dass der Befestigungsabschnitt aus dem durch Umspritzen gebildeten Kunststoffgehäuse (6) herausragt.

## Claims

1. A tyre pressure monitoring unit comprising
a measurement and transmission electronics unit for measuring and wirelessly transmitting pressure information,
a power source (2) for supplying power to the measurement and transmission electronics unit, and
a plastic body (6), in which the measurement and transmission electronics unit and also the power source (2) are embedded,
**characterised by** a metal carrier sheet (4), which carries the measurement and transmission electronics unit and also the power source (2) and protrudes out from the plastic body (6) with a fastening portion, which has a fastening hole (5).

2. The tyre pressure monitoring unit according to Claim 1, **characterised in that** the fastening portion is bent with respect to a main portion of the metal carrier sheet (4), said main portion carrying the measurement and transmission electronics unit.

3. The tyre pressure monitoring unit according to Claim 2, **characterised in that** the fastening portion encloses an angle between 90° and 150° with the main portion.

4. The tyre pressure monitoring unit according to any one of the preceding claims, **characterised in that** the fastening hole (5) is a slot.

5. The tyre pressure monitoring unit according to any one of the preceding claims, **characterised in that** the measurement and transmission electronics unit is arranged on a circuit carrier plate (1), which rests on the metal carrier sheet (4).

6. The tyre pressure monitoring unit according to Claim 5, **characterised in that** the power source (2) sits on the circuit carrier plate (1).

7. The tyre pressure monitoring unit according to Claim 5 or 6, **characterised in that** at least one retaining tab is punched out from the metal carrier sheet (4) and is bent up, and holds the circuit carrier plate (1).

8. The tyre pressure monitoring unit according to any one of the preceding claims, **characterised in that** the underside of the main portion of the metal carrier sheet (4) carrying the measurement and transmission electronics and the power source (2) is covered at least in part, preferably completely, by the plastic body.

9. The tyre pressure monitoring unit according to any one of the preceding claims, **characterised in that** the power source (2) is a generator.

10. A method for producing a tyre pressure monitoring unit, wherein a measurement and transmission electronics unit for measuring and wirelessly transmitting pressure information and also a power source (2) for supplying power to the measurement and transmission electronics unit are overmoulded with plastic so as to form a plastic casing (6) of the tyre pressure monitoring unit, **characterised in that** the measurement and transmission electronics unit and also the power source (2), before the overmoulding process, are arranged on a metal carrier sheet (4), which comprises a main portion, on which the measurement and electronics unit is arranged, and a fastening portion having a fastening hole (5), and
during the overmoulding process the fastening portion is left free, such that the fastening portion protrudes out from the plastic casing (6) formed by overmoulding.

## Revendications

1. Unité de surveillance de la pression des pneus, avec
une électronique de mesure et d'émission destinée à mesurer et à envoyer sans fil des informations concernant la pression,
une source d'énergie (2) pour l'alimentation en courant de l'électronique de mesure et d'émission, et
un corps en plastique (6) dans lequel sont enrobées l'électronique de mesure et d'émission ainsi que la source d'énergie (2),
**caractérisée en ce qu'**une tôle de support (4) portant l'électronique de mesure et d'émission ainsi que la source d'énergie (2) et comportant une portion de fixation avec un trou de fixation (5) fait saillie hors du corps en plastique.

2. Unité de surveillance de la pression des pneus selon la revendication 1, **caractérisée en ce que** la portion de fixation est coudée par rapport à une portion principale de la tôle de support (4) portant l'électronique de mesure et d'émission.

3. Unité de surveillance de la pression des pneus selon la revendication 2, **caractérisée en ce que** la portion de fixation forme un angle compris entre 90° et 150° avec la portion principale.

4. Unité de surveillance de la pression des pneus selon l'une des revendications précédentes, **caractérisée en ce que** le trou de fixation (5) est un trou oblong.

5. Unité de surveillance de la pression des pneus selon l'une des revendications précédentes, **caractérisée en ce que** l'électronique de mesure et d'émission est agencée sur une plaquette à circuits imprimés (1) disposée sur la tôle de support (4).

6. Unité de surveillance de la pression des pneus selon la revendication 5, **caractérisée en ce que** la source d'énergie (2) s'appuie sur la plaquette à circuits imprimés (1).

7. Unité de surveillance de la pression des pneus selon la revendication 5 ou 6, **caractérisée en ce qu'**au moins une patte de retenue portant la plaquette à circuits imprimés (1) est découpée dans la tôle de support (4) et coudée.

8. Unité de surveillance de la pression des pneus selon l'une des revendications précédentes, **caractérisée en ce que** la face inférieure de la portion principale de la tôle de support (4) portant l'électronique de mesure et d'émission et la source d'énergie (2) est au moins partiellement, de préférence entièrement recouverte par le corps en plastique.

9. Unité de surveillance de la pression des pneus selon l'une des revendications précédentes, **caractérisée en ce que** la source d'énergie (2) est un générateur.

10. Procédé pour la fabrication d'une unité de surveillance de la pression des pneus, dans lequel une électronique de mesure et d'émission destinée à mesurer et envoyer sans fil des informations concernant la pression, ainsi qu'une source d'énergie (2) pour l'alimentation en courant de l'électronique de mesure et d'émission sont enrobés de plastique, de manière à former un boîtier en plastique (6) de l'unité de surveillance de la pression des pneus, **caractérisé en ce que** l'électronique de mesure et d'émission ainsi que la source d'énergie (2) sont disposées sur une tôle de support (4) avant l'enrobage, laquelle comporte une portion principale sur laquelle est disposée l'électronique de mesure et d'émission et une portion de fixation avec un trou de fixation (5), et
la portion de fixation est laissée libre pendant l'enrobage, de sorte que la portion de fixation fait saillie hors du boîtier en plastique (6) formé par l'enrobage.
